# FASCICULE DE BREVET EUROPEEN

(11) **EP 3 039 342 B1**
(45) Date de publication et mention de la délivrance du brevet: **04.04.2018**
(21) Numéro de dépôt: 14787226.1
(22) Date de dépôt: 29.09.2014
(51) Int. Cl.: F23R 3/10, F23R 3/14, F23R 3/28

(54) **CHAMBRE DE COMBUSTION POUR TURBOMACHINE A ADMISSION D'AIR HOMOGÈNE AU TRAVERS DE SYSTÈMES D'INJECTION DE CARBURANT**
GASTURBINENVERBRENNUNGSKAMMER MIT HOMOGENEM LUFTEINLASS DURCH DIE BRENNSTOFFEINSPRITZUNGSVORRICHTUNGEN
COMBUSTION CHAMBER FOR GAS TURBINE WITH HOMOGENEOUS AIR INLET THROUGH THE FUEL INJECTION SYSTEMS

(30) Priorité: 01.10.2013 FR 1359503
(43) Date de publication de la demande: 06.07.2016
(73) Titulaire: SNECMA, 75015 Paris (FR)
(72) Inventeur: RULLAUD, Matthieu François, F-77550 Moissy-Cramayel Cedex (FR); LUNEL, Romain Nicolas, F-77550 Moissy-Cramayel Cedex (FR); NOEL, Thomas Olivier Marie, F-77550 Moissy-Cramayel Cedex (FR)
(74) Mandataire: Brevalex
(86) Numéro de dépôt international: PCT/FR2014/052446
(87) Numéro de publication internationale: WO 2015/049446

(56) Documents cités:
- EP-A1- 0 564 171
- EP-A2- 0 735 318
- WO-A1-99/63275
- FR-A1- 2 704 305
- FR-A1- 2 909 163
- FR-A1- 2 958 015
- US-A- 5 490 378
- US-A- 5 934 066

## Description

### DOMAINE TECHNIQUE

La présente invention concerne une chambre de combustion annulaire pour turbomachine, notamment pour ensemble propulsif d'aéronef.

L'invention s'applique en particulier mais non exclusivement aux chambres de combustion munies d'une rangée annulaire d'injecteurs de carburant comprenant chacun une tête pourvue d'un nez central d'injection de carburant et d'un dispositif périphérique d'injection de carburant, par exemple de type multipoint. Les injecteurs de ce type sont utilisés dans les chambres de combustion dites à « combustion pauvre étagée ».

L'invention concerne également un module de chambre de combustion ainsi qu'une turbomachine comprenant un tel module de chambre de combustion.

### ÉTAT DE LA TECHNIQUE ANTÉRIEURE

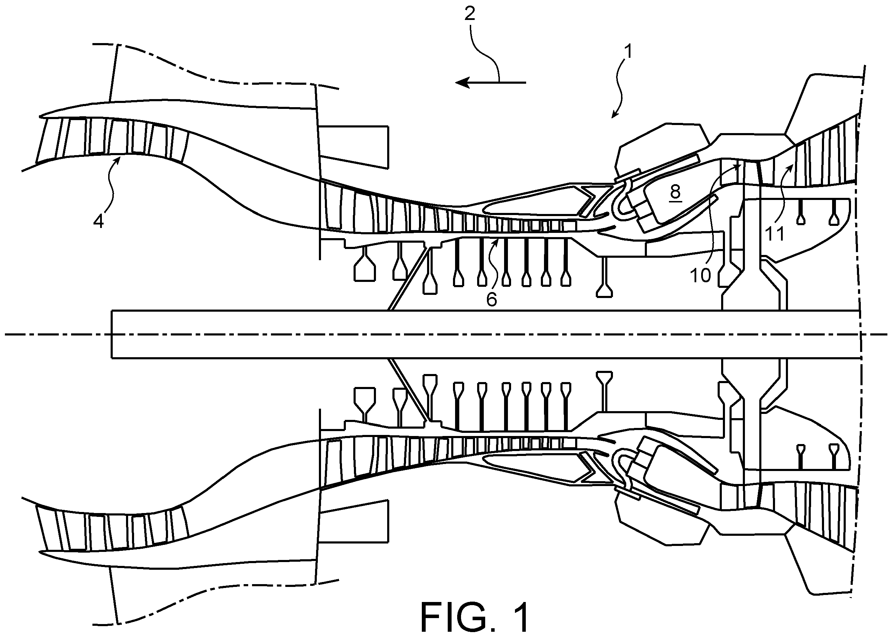

La figure 1 illustre un exemple typique de turbomachine 1 d'un type connu, par exemple un turboréacteur d'aéronef à double flux et à double corps.

La turbomachine 1 comprend, successivement selon la direction de poussée représentée par la flèche 2 correspondant également à la direction générale d'écoulement des gaz dans la turbomachine, un compresseur basse pression 4, un compresseur haute pression 6, une chambre annulaire de combustion 8, une turbine haute pression 10 et une turbine basse pression 11.

Dans la description qui suit, les directions amont et aval sont définies relativement au sens général d'écoulement des gaz au sein de la chambre de combustion et plus généralement de la turbomachine.

D'une manière bien connue, la chambre de combustion 8 est montée en aval du compresseur haute pression 6 destiné à alimenter cette chambre en air sous pression, et en amont de la turbine haute pression 10 destinée à entraîner en rotation le compresseur haute pression 6 sous l'effet de la poussée des gaz provenant de la chambre de combustion.

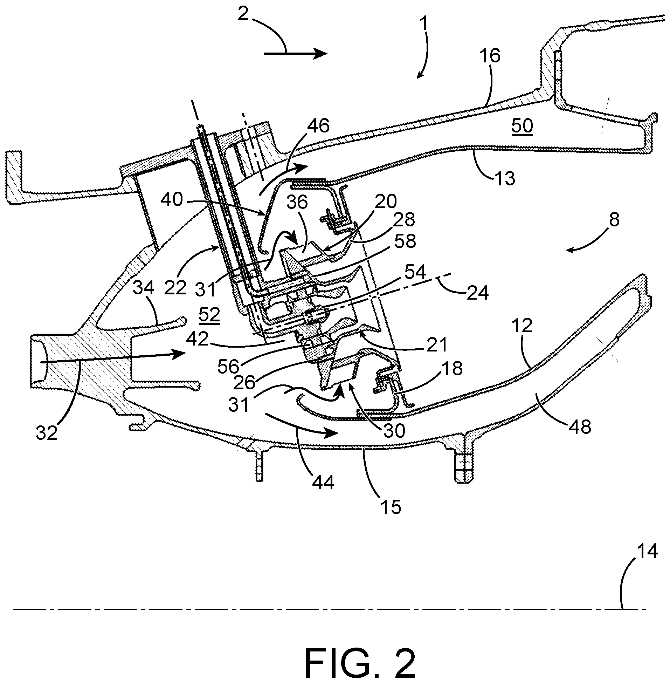

La figure 2 illustre à plus grande échelle la chambre de combustion 8 et son environnement immédiat.

La chambre de combustion 8 comprend deux parois annulaires coaxiales, respectivement radialement interne 12 et radialement externe 13, qui s'étendent autour de l'axe longitudinal 14 de la chambre de combustion.

Ces deux parois annulaires 12 et 13 sont fixées en aval à des carters interne 15 et externe 16 de la chambre, et sont reliées l'une à l'autre à leur extrémité amont par une paroi annulaire de fond 18 de la chambre de combustion.

La paroi annulaire de fond 18 comporte une rangée annulaire d'orifices régulièrement répartis autour de l'axe 14 de la chambre de combustion, et dans lesquels sont montés des systèmes d'injection 20 dans lesquels des têtes 21 respectives d'injecteurs de carburant 22 sont respectivement montées ajustées. Ces injecteurs de carburant 22 présentent chacun un axe d'émission de carburant qui se confond avec un axe 24 du système d'injection 20 correspondant. Les systèmes d'injection 20 sont montés dans la paroi de fond 18 de manière à pouvoir se déplacer légèrement selon une direction orthogonale à l'axe 24 et tolérer ainsi les dilatations différentielles affectant la chambre de combustion 8, les systèmes d'injection 20 et les carters 15 et 16, en fonctionnement.

L'ensemble formé par la chambre de combustion 8 et par les injecteurs de carburant 22 est appelé « module de chambre de combustion » dans la présente description.

Chaque système d'injection 20 comporte une extrémité amont formant une douille 26, une extrémité aval prenant la forme d'un bol 28 évasé débouchant dans la chambre de combustion 8, et une entrée d'air annulaire 30 agencée entre la douille 26 et le bol 28 et destinée à l'admission d'une partie 31 du flux d'air 32 provenant d'un diffuseur 34 monté en sortie du compresseur haute pression de la turbomachine, en vue d'un pré-mélange de l'air admis avec le carburant issu de l'injecteur de carburant 22 monté dans la douille 26, au sein du système d'injection.

Dans l'exemple illustré, l'entrée d'air annulaire 30 est traversée par des ailettes 36 destinées à imprimer au flux d'air qui les traverse un mouvement de giration. L'entrée d'air est ainsi du type couramment dénommé « vrille ».

Par ailleurs, les parois annulaires 12 et 13 de la chambre de combustion sont reliées à leur extrémité amont à un carénage annulaire 40 comportant des orifices 42 agencés en regard des systèmes d'injection 20 pour le passage des injecteurs de carburant 22 et de l'air 31 alimentant les systèmes d'injection 20. Ce carénage 40 a pour fonctions principales la protection de la paroi de fond 18 de la chambre de combustion et le guidage de parties 44 et 46 du flux d'air 32 qui circulent vers l'aval respectivement le long des parois annulaires interne 12 et externe 13 de la chambre de combustion, au sein de deux espaces de contournement respectivement interne 48 et externe 50. Dans ce qui suit, ces parties 44 et 46 du flux d'air 32 sont respectivement dénommées « flux d'air de contournement interne » et « flux d'air de contournement externe ». Les espaces de contournement interne 48 et externe 50 forment, avec un espace amont 52 qui les raccorde l'un à l'autre, une enceinte dans laquelle s'étend la chambre de combustion 8. Bien entendu, chaque orifice 42 est situé en amont de l'entrée d'air annulaire 30 par rapport à l'axe 24 du système d'injection correspondant.

Toutefois, l'alimentation en air de l'entrée d'air annulaire 30 des systèmes d'injection 20 présente un caractère inhomogène autour de l'axe 24 de chaque système d'injection, de nature à induire une réduction des performances de la chambre de combustion notamment en termes de limitation des émissions de polluants et en termes de maîtrise du profil thermique des gaz d'échappement en sortie de la chambre de combustion.

Ce problème est d'autant plus prononcé dans le cas des chambres de combustion mettant en oeuvre un mode de combustion dite « pauvre étagée », telle que la chambre de combustion de la figure 2. Dans ce type de chambre de combustion, la tête 21 de chaque injecteur 22 comporte un nez central 54 d'injection de carburant, un dispositif d'admission d'air axial 56 agencé autour du nez central 54, et un dispositif périphérique 58 d'injection de carburant agencé autour du dispositif d'admission d'air axial 56. Le carburant issu du nez central 54 se mélange, au sein de chaque système d'injection, avec l'air admis au travers du dispositif d'admission d'air axial 56, tandis que le carburant issu du dispositif périphérique 58 d'injection de carburant se mélange, au sein de chaque système d'injection, avec l'air admis au travers de l'entrée d'air annulaire 30 du système d'injection. Or, les systèmes d'injection de ce type présentent un encombrement transversal relativement important, de nature à accroître les inhomogénéités du flux d'air 31. De plus, ces systèmes d'injection requièrent un débit d'air relativement important pour fonctionner, ce qui tend à accentuer les hétérogénéités dans la chambre de combustion 8.

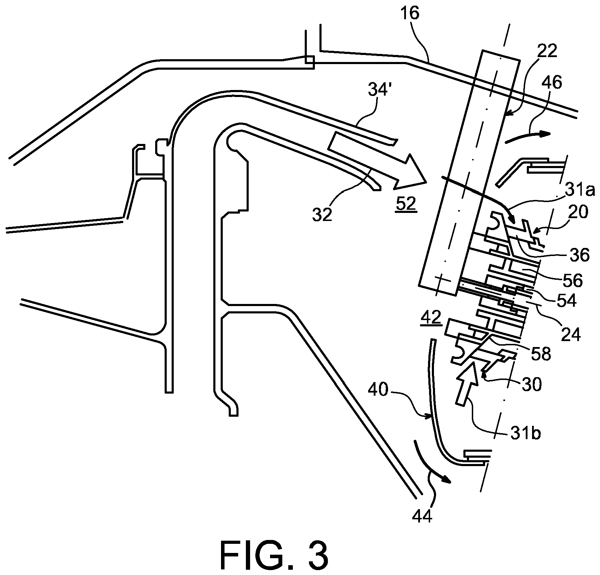

Les problèmes décrits ci-dessus sont particulièrement marqués dans le cas d'une chambre de combustion agencée en sortie d'un diffuseur 34' de type centrifuge, comme illustré sur la figure 3.

Dans ce cas en effet, une partie radialement externe de l'entrée d'air annulaire 30 de chaque système d'injection 20 reçoit un flux d'air direct 31a tandis qu'une partie radialement interne de l'entrée annulaire 30 ne reçoit qu'un flux d'air indirect 31b.

Une chambre de combustion annulaire pour turbomachine selon le préambule de la revendication 1 est décrite par le document US5490378.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet une chambre de combustion annulaire pour turbomachine, comprenant :
- une paroi de fond annulaire pourvue d'une pluralité de systèmes d'injection centrés chacun sur un axe respectif et présentant chacun une extrémité amont formant une douille destinée à recevoir une tête d'un injecteur de carburant, une extrémité aval débouchant dans ladite chambre de combustion, et une entrée d'air annulaire agencée entre lesdites extrémités amont et aval de sorte que l'air admis au travers de ladite entrée d'air annulaire se mélange, au sein du système d'injection, avec le carburant issu de l'injecteur de carburant, et
- un carénage annulaire recouvrant un côté amont de ladite paroi de fond et comprenant une pluralité d'orifices de passage d'injecteur agencés respectivement en regard desdits systèmes d'injection, ledit carénage annulaire et ladite paroi de fond délimitant conjointement un espace annulaire dans lequel débouche l'entrée d'air annulaire de chaque système d'injection.

Selon l'invention, ledit carénage annulaire comporte une pluralité d'orifices d'admission d'air séparés desdits orifices de passage d'injecteur.

De plus, ladite douille de chacun desdits systèmes d'injection traverse l'orifice de passage d'injecteur correspondant dudit carénage annulaire et comprend à son extrémité amont une collerette annulaire présentant une extrémité libre éloignée dudit axe du système d'injection par une première distance supérieure ou égale à une deuxième distance séparant un bord dudit orifice de passage d'injecteur correspondant et ledit axe du système d'injection.

La collerette annulaire de la douille de chaque système d'injection permet de masquer l'entrée de l'orifice de passage d'injecteur correspondant du carénage annulaire et de réduire ainsi sensiblement à néant le flux d'air alimentant l'entrée d'air annulaire du système d'injection via ledit orifice de passage d'injecteur. L'alimentation de l'entrée d'air annulaire est ainsi quasi exclusivement assurée de manière indirecte par de l'air passant par les orifices d'admission d'air du carénage annulaire.

Il en résulte une meilleure homogénéité de l'alimentation en air de l'entrée d'air annulaire de chaque système d'injection, comme cela apparaîtra plus clairement dans ce qui suit.

De plus, cette configuration permet de conserver le caractère mobile de chaque système d'injection par rapport au carénage annulaire et à la paroi de fond de la chambre de combustion.

De préférence, lesdits orifices d'admission d'air et lesdits orifices de passage d'injecteur sont répartis de sorte qu'au moins un orifice d'admission d'air soit agencé circonférentiellement entre chaque paire d'orifices de passage d'injecteur consécutifs le long de la circonférence dudit carénage annulaire.

Une telle répartition permet d'optimiser l'homogénéité de l'alimentation en air de l'entrée d'air annulaire de chaque système d'injection.

Dans ce cas, lesdits orifices d'admission d'air sont de préférence répartis en alternance avec lesdits orifices de passage d'injecteur le long de la circonférence dudit carénage annulaire.

L'invention concerne également un module de chambre de combustion pour turbomachine, comprenant :
- une chambre de combustion annulaire du type décrit ci-dessus, et
- une rangée annulaire d'injecteurs de carburant comprenant des têtes d'injecteur respectives montées ajustées respectivement dans lesdites douilles des systèmes d'injection de ladite chambre de combustion.

L'invention s'applique avantageusement à un tel module de chambre de combustion, dans lequel chaque tête d'injecteur comporte un nez central d'injection de carburant, un dispositif d'admission d'air axial agencé autour dudit nez central, et un dispositif périphérique d'injection de carburant agencé autour dudit dispositif d'admission d'air axial.

Par ailleurs, lesdits orifices de passage d'injecteur dudit carénage annulaire présentent avantageusement des isobarycentres respectifs qui s'inscrivent sur un premier cercle centré sur un axe de ladite chambre de combustion et ayant un premier diamètre.

Dans un premier mode de réalisation préféré de l'invention, lesdits orifices d'admission d'air dudit carénage annulaire présentent des isobarycentres respectifs qui s'inscrivent sur un deuxième cercle centré sur l'axe de ladite chambre de combustion et ayant un deuxième diamètre strictement supérieur audit premier diamètre dudit premier cercle.

Dans un deuxième mode de réalisation préféré de l'invention, lesdits orifices d'admission d'air dudit carénage annulaire présentent des isobarycentres respectifs qui s'inscrivent sur ledit premier cercle.

L'invention concerne enfin une turbomachine pour aéronef, comprenant un module de chambre de combustion du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en coupe axiale d'une turbomachine d'un type connu ;
- la figure 2, déjà décrite, est une vue schématique partielle en coupe axiale d'un module de chambre de combustion de la turbomachine de la figure 1, comprenant un diffuseur axial ;
- la figure 3, déjà décrite, est une vue schématique partielle en coupe axiale d'un module de chambre de combustion d'une turbomachine d'un type connu, comprenant un diffuseur centrifuge ;
- la figure 4 est une vue schématique partielle en coupe axiale d'un module de chambre de combustion d'une turbomachine selon un premier mode de réalisation préféré de l'invention ;
- la figure 5 est une vue schématique partielle en coupe axiale d'une chambre de combustion appartenant au module de chambre de combustion de la figure 4 et représentée isolée ;
- la figure 6 est une vue schématique partielle du module de chambre de combustion de la figure 4, vu depuis l'amont ;
- la figure 7 est une vue semblable à la figure 6, illustrant une variante de réalisation du module de chambre de combustion de la figure 4;
- la figure 8 est une vue semblable à la figure 6, illustrant un module de chambre de combustion d'une turbomachine selon un deuxième mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PREFERES

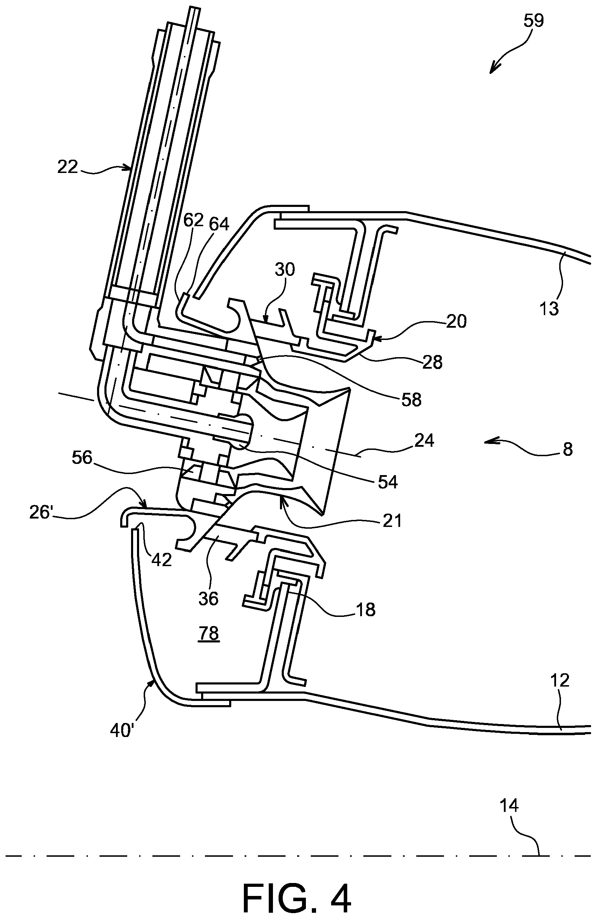

Les figures 4 à 6 illustrent une partie d'un module de chambre de combustion 59 selon un premier mode de réalisation préféré de l'invention. Ce module de chambre de combustion fait partie d'une turbomachine dont les autres parties peuvent être d'un type conventionnel, tel qu'illustré sur la figure 1 décrite ci-dessus.

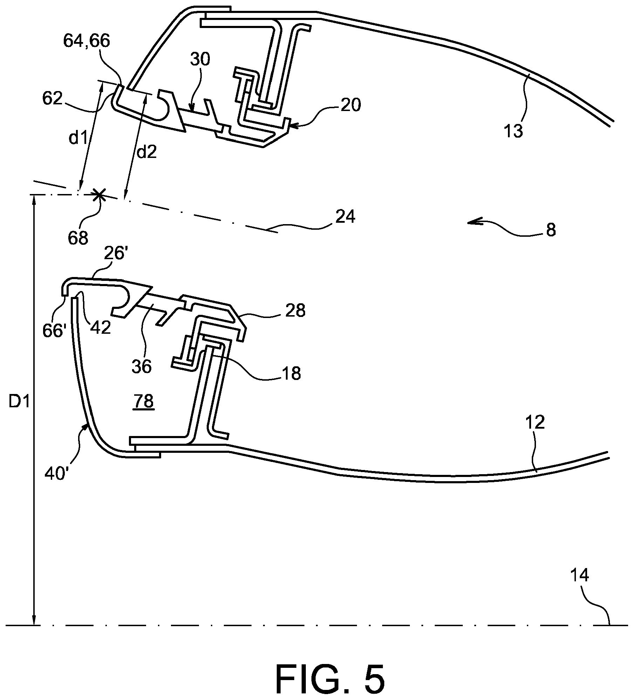

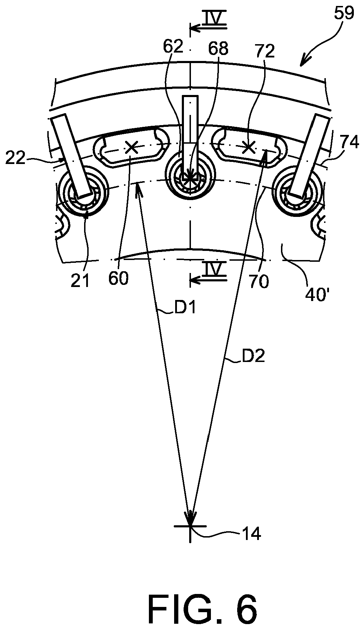

Les figures 4 et 6 montrent plus particulièrement une partie arrière de la chambre de combustion 8 ainsi que les injecteurs 22 du module de chambre de combustion, tandis que la figure 5 illustre la partie arrière de la chambre de combustion 8 seule.

Comme cela apparaît sur la figure 6, le carénage annulaire 40' qui recouvre le côté amont de la chambre de combustion 8 comporte une pluralité d'orifices d'admission d'air 60 séparés des orifices de passage d'injecteur 42. Dans l'exemple illustré, les orifices d'admission d'air 60 sont répartis en alternance avec les orifices de passage d'injecteur 42 le long de la circonférence du carénage annulaire 40'. De manière connue en soi, chaque orifice de passage d'injecteur 42 est situé en amont de l'entrée d'air annulaire 30 par rapport à l'axe 24 du système d'injection correspondant.

Comme le montrent les figures 4 et 5, la douille 26' de chaque système d'injection 20 traverse l'orifice de passage d'injecteur 42 correspondant du carénage annulaire 40'.

La douille 26' comprend à son extrémité amont une collerette annulaire 62. Cette collerette annulaire 62 présente une extrémité libre 64 éloignée de l'axe 24 du système d'injection 20 par une première distance d1 (figure 5) supérieure ou égale à une deuxième distance d2 séparant un bord dudit orifice de passage d'injecteur 42 et l'axe 24 du système d'injection.

Dans l'exemple illustré, la collerette annulaire 62 ne présente pas de symétrie de révolution. En effet, la première distance d1 varie légèrement autour de l'axe 24 du système d'injection.

Plus précisément, une partie radialement externe de la collerette annulaire 62 est plus étendue qu'une partie radialement interne de celle-ci. Ainsi, dans le plan de section axiale de la figure 5, le côté radialement externe 66 de l'extrémité libre 64 est davantage écarté de l'axe 24 du système d'injection que ne l'est le côté radialement interne 66' de l'extrémité libre 64.

De manière analogue, l'orifice de passage d'injecteur 42 ne présente pas de symétrie de révolution, de sorte que la deuxième distance d2 varie légèrement autour de l'axe 24 du système d'injection.

L'inégalité ci-dessus entre la première distance d1 et la deuxième distance d2 est valable au sein de chaque plan de section axial du module de chambre de combustion.

Par ailleurs, dans l'exemple illustré, la chambre de combustion est du type à combustion pauvre étagée. Ainsi, chaque tête d'injecteur comporte un nez central 54 d'injection de carburant, un dispositif d'admission d'air axial 56 agencé autour dudit nez central 54, et un dispositif périphérique 58 d'injection de carburant agencé autour dudit dispositif d'admission d'air axial. Ce dispositif périphérique 58 est par exemple du type « multipoint », c'est-à-dire comportant une rangée annulaire d'orifice d'éjection de carburant.

Comme le montre la figure 6, les orifices de passage d'injecteur 42 du carénage annulaire 40' présentent des isobarycentres 68 respectifs qui s'inscrivent sur un premier cercle 70 centré sur l'axe 14 de la chambre de combustion 8 et ayant un premier diamètre D1.

Dans le premier mode de réalisation de l'invention, les orifices d'admission d'air 60 du carénage annulaire 40' présentent des isobarycentres 72 respectifs qui s'inscrivent sur un deuxième cercle 74 centré sur l'axe 14 de la chambre de combustion 8 et ayant un deuxième diamètre D2 strictement supérieur au premier diamètre D1 dudit premier cercle 70.

Ainsi, les orifices d'admission d'air 60 sont décalés radialement vers l'extérieur du carénage annulaire 40'. Cette configuration est particulièrement avantageuse lorsque le diffuseur fournissant l'air à la chambre de combustion est du type centrifuge, comme dans l'exemple de l'art antérieur illustré sur la figure 3.

Dans l'exemple de la figure 6, les orifices d'admission d'air 60 ont une forme oblongue selon la direction circonférentielle. De plus, chaque orifice d'admission d'air 60 est éloigné du premier cercle 70 précité.

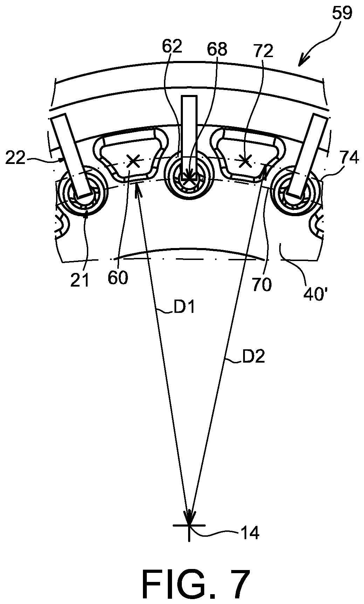

En variante, chaque orifice d'admission d'air 60 peut s'étendre jusqu'au premier cercle 70, comme l'illustre la figure 7. Dans ce cas, le bord de chaque orifice d'admission d'air 60 présente avantageusement des régions latérales incurvées de manière à suivre sensiblement la courbe de l'orifice de passage d'injecteur 42 situé à proximité.

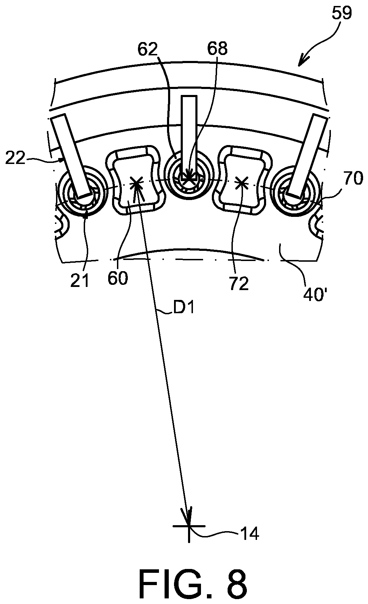

Dans un deuxième mode de réalisation préféré de l'invention illustré sur la figure 8, les orifices d'admission d'air 60 du carénage annulaire 40' présentent des isobarycentres 72 respectifs qui s'inscrivent sur le premier cercle 70.

Cette configuration est particulièrement avantageuse lorsque le diffuseur fournissant l'air à la chambre de combustion est du type axial, comme dans l'exemple de l'art antérieur illustré sur la figure 2.

Dans tous les cas, en fonctionnement, l'air alimentant l'entrée d'air annulaire 30 de chaque système d'injection 20 passe exclusivement ou quasi exclusivement au travers des orifices d'admission d'air 60 du carénage annulaire 40'. En effet, la collerette annulaire 62 de la douille de chaque système d'injection 20 empêche sensiblement le passage de l'air autour de chaque système d'injection au travers de l'orifice de passage d'injecteur 42 correspondant. La collerette annulaire 62 et le bord de l'orifice de passage d'injecteur 42 forment en effet une chicane annulaire pour le flux d'air issu du diffuseur alimentant la chambre de combustion en air sous pression.

De ce fait, l'air alimentant l'entrée d'air annulaire 30 de chaque système d'injection 20 circule préalablement en tourbillonnant au sein d'un espace 78 (figure 4) défini entre la paroi de fond 18 et le carénage annulaire 40' de la chambre de combustion.

Il en résulte une amélioration de l'homogénéité de l'alimentation en air de l'entrée d'air annulaire 30 autour de son axe respectif.

Dans les modes de réalisation préférés décrits ci-dessus, les orifices de passage d'injecteur et d'admission d'air sont répartis de manière à alterner.

En variante, d'autres configurations sont possibles sans sortir du cadre de l'invention.

D'une manière générale, pour assurer une homogénéité optimale de l'alimentation en air de l'entrée d'air annulaire 30 de chaque système d'injection, les orifices d'admission d'air 60 et les orifices de passage d'injecteur 42 sont de préférence répartis de sorte qu'au moins un orifice d'admission d'air 60 soit agencé circonférentiellement entre chaque paire d'orifices de passage d'injecteur 42 consécutifs le long de la circonférence du carénage annulaire 40'.

## Revendications

1. Chambre de combustion annulaire (8) pour turbomachine, comprenant :
- une paroi de fond (18) annulaire pourvue d'une pluralité de systèmes d'injection (20) centrés chacun sur un axe respectif (24) et présentant chacun une extrémité amont formant une douille (26') destinée à recevoir une tête (21) d'un injecteur de carburant (22), une extrémité aval (28) débouchant dans ladite chambre de combustion, et une entrée d'air annulaire (30) agencée entre lesdites extrémités amont et aval de sorte que l'air admis au travers de ladite entrée d'air annulaire (30) se mélange, au sein du système d'injection, avec le carburant issu de l'injecteur de carburant (22), et
- un carénage annulaire (40') recouvrant un côté amont de ladite paroi de fond (18) et comprenant une pluralité d'orifices de passage d'injecteur (42) agencés respectivement en regard desdits systèmes d'injection (20), ledit carénage annulaire (40') et ladite paroi de fond (18) délimitant conjointement un espace annulaire (78) dans lequel débouche l'entrée d'air annulaire (30) de chaque système d'injection (20),
ledit carénage annulaire (40') comportant une pluralité d'orifices d'admission d'air (60) séparés desdits orifices de passage d'injecteur (42), ladite chambre de combustion étant **caractérisée en ce que** ladite douille (26') de chacun desdits systèmes d'injection traverse l'orifice de passage d'injecteur (42) correspondant dudit carénage annulaire et comprend à son extrémité amont une collerette annulaire (62) présentant une extrémité libre (64) éloignée dudit axe (24) du système d'injection par une première distance (d1) supérieure ou égale à une deuxième distance (d2) séparant un bord dudit orifice de passage d'injecteur (42) correspondant et ledit axe (24) du système d'injection.

2. Chambre de combustion annulaire selon la revendication 1, dans laquelle lesdits orifices d'admission d'air (60) et lesdits orifices de passage d'injecteur (42) sont répartis de sorte qu'au moins un orifice d'admission d'air (60) soit agencé circonférentiellement entre chaque paire d'orifices de passage d'injecteur (42) consécutifs le long de la circonférence dudit carénage annulaire (40').

3. Chambre de combustion annulaire selon la revendication 2, dans laquelle lesdits orifices d'admission d'air (60) sont répartis en alternance avec lesdits orifices de passage d'injecteur (42) le long de la circonférence dudit carénage annulaire (40').

4. Module de chambre de combustion (59) pour turbomachine, comprenant :
- une chambre de combustion annulaire (8) selon l'une quelconque des revendications 1 à 3, et
- une rangée annulaire d'injecteurs de carburant (22) comprenant des têtes d'injecteur (21) respectives montées ajustées respectivement dans lesdites douilles (26') des systèmes d'injection (20) de ladite chambre de combustion.

5. Module de chambre de combustion selon la revendication 4, dans lequel chaque tête d'injecteur (21) comporte un nez central (54) d'injection de carburant, un dispositif d'admission d'air axial (56) agencé autour dudit nez central, et un dispositif périphérique (58) d'injection de carburant agencé autour dudit dispositif d'admission d'air axial.

6. Module de chambre de combustion selon la revendication 4 ou 5, dans lequel lesdits orifices de passage d'injecteur (42) dudit carénage annulaire (40') présentent des isobarycentres (68) respectifs qui s'inscrivent sur un premier cercle (70) centré sur un axe (14) de ladite chambre de combustion (8) et ayant un premier diamètre (D1).

7. Module de chambre de combustion selon la revendication 6, dans lequel lesdits orifices d'admission d'air (60) dudit carénage annulaire (40') présentent des isobarycentres (72) respectifs qui s'inscrivent sur un deuxième cercle (74) centré sur l'axe (14) de ladite chambre de combustion (8) et ayant un deuxième diamètre (D2) strictement supérieur audit premier diamètre (D1) dudit premier cercle (70).

8. Module de chambre de combustion selon la revendication 6, dans lequel lesdits orifices d'admission d'air (60) dudit carénage annulaire (40') présentent des isobarycentres (72) respectifs qui s'inscrivent sur ledit premier cercle (70).

9. Turbomachine pour aéronef, **caractérisée en ce qu'**elle comprend un module de chambre de combustion (59) selon l'une quelconque des revendications 4 à 8.

## Patentansprüche

1. Ringbrennkammer (8) für Turbotriebwerke mit:
- einer ringförmigen Bodenwandung (18), die mit einer Vielzahl von Einspritzvorrichtungen (20) versehen ist, die jeweils auf einer Achse (24) zentriert sind und jeweils ein stromaufwärts befindliches Ende aufweisen, das eine Hülse (26') bildet, die dazu bestimmt ist, einen Kopf (21) einer Brennstoffeinspritzdüse (22) aufzunehmen, ein stromabwärts befindliches Ende (28) aufweisen, das in die genannte Brennkammer mündet, sowie einen ringförmigen Lufteinlass (30) aufweisen, der zwischen den genannten stromaufwärts und stromabwärts befindlichen Enden dergestalt angeordnet ist, dass sich die Luft, die durch diesen ringförmigen Lufteinlass (30) zugeführt wird, innerhalb der Einspritzvorrichtung mit dem von der Brennstoffeinspritzdüse (22) kommenden Brennstoff mischt, und
- einem ringförmigen Mantel (40'), der eine stromaufwärts befindliche Seite der genannten Bodenwandung (18) abdeckt und eine Vielzahl von Einspritzdüsen-Durchlassöffnungen (42) enthält, die jeweils gegenüber den genannten Einspritzvorrichtungen (20) angeordnet sind, wobei dieser ringförmige Mantel (40') und diese Bodenwandung (18) zusammen einen ringförmigen Zwischenraum (78) bilden, in den der ringförmige Lufteinlass (30) jeder Einspritzvorrichtung (20) mündet, wobei dieser ringförmige Mantel (40') eine Vielzahl von Luftzufuhröffnungen (60) getrennt von diesen Einspritzdüsen-Durchlassöffnungen (42) enthält,
**dadurch gekennzeichnet,**
**dass** die genannte Hülse (26') jeder der genannten Einspritzvorrichtungen durch die entsprechende Einspritzdüsen-Durchlassöffnung (42) des genannten ringförmigen Mantels hindurch verläuft und an ihrem stromaufwärts befindlichen Ende einen ringförmigen umgebogenen Rand (62) aufweist, dessen freies Ende (64) von der genannten Achse (24) der Einspritzvorrichtung um eine erste Distanz (d1) entfernt ist, die größer oder gleich einer zweiten Distanz (d2) ist, die einen Rand der entsprechenden Einspritzdüsen-Durchlassöffnung (42) von dieser Achse (24) der Einspritzvorrichtung trennt.

2. Ringbrennkammer nach Anspruch 1, bei der die Luftzufuhröffnungen (60) und die Einspritzdüsen-Durchlassöffnungen (42) dergestalt verteilt angeordnet sind, dass mindestens eine Luftzufuhröffnung (60) am Außenumfang zwischen jedem Paar aufeinander folgender Einspritzdüsen-Durchlassöffnungen (42) entlang des Außenumfangs des genannten ringförmigen Mantels (40') angeordnet ist.

3. Ringbrennkammer nach Anspruch 1, bei der die Luftzufuhröffnungen (60) abwechselnd mit den Einspritzdüsen-Durchlassöffnungen (42) entlang des Außenumfangs des genannten ringförmigen Mantels (40') angeordnet sind.

4. Brennkammer-Modul (59) für Turbotriebwerke, welches umfasst:
- eine Ringbrennkammer (8) nach einem der Ansprüche 1 bis 3, und
- eine ringförmig angeordnete Reihe von Brennstoffeinspritzdüsen (22) mit jeweiligen Einspritzdüsen-Köpfen (21), die jeweils ausgerichtet in den Hülsen (26') der Einspritzvorrichtungen (20) dieser Brennkammer sitzen.

5. Brennkammer-Modul nach Anspruch 4, bei dem jeder Einspritzdüsen-Kopf (21) eine mittig angeordnete Nase (54) zum Einspritzen von Brennstoff, eine axiale Luftzufuhrvorrichtung (56), die um diese mittig sitzende Nase herum angeordnet ist, und eine peripherische Vorrichtung (58) zum Einspritzen von Brennstoff, die um die genannte axiale Luftzufuhrvorrichtung herum angeordnet ist, aufweist.

6. Brennkammer-Modul nach Anspruch 4 oder 5, bei dem die genannten Einspritzdüsen-Durchlassöffnungen (42) des ringförmigen Mantels (40') jeweilige Isobaren-Zentren (68) aufweisen, die auf einem ersten Kreis (70) sitzen, der auf einer Achse (14) der Brennkammer (8) zentriert ist und einen ersten Durchmesser (D1) hat.

7. Brennkammer-Modul nach Anspruch 6, bei dem die Luftzufuhröffnungen (60) des ringförmigen Mantels (40') jeweilige Isobaren-Zentren (72) aufweisen, die auf einem zweiten Kreis (74) sitzen, der auf der Achse (14) der Brennkammer (8) zentriert ist und einen zweiten Durchmesser (D2) hat.

8. Brennkammer-Modul nach Anspruch 6, bei dem die Luftzufuhröffnungen (60) des ringförmigen Mantels (40') jeweilige Isobaren-Zentren (72) aufweisen, die auf dem genannten ersten Kreis (70) sitzen.

9. Turbotriebwerk für Luftfahrzeuge,
**dadurch gekennzeichnet,**
**dass** es ein Brennkammer-Modul (59) nach einem der Ansprüche 4 bis 8 aufweist.

## Claims

1. An annular combustion chamber (8) for a turbine engine, comprising :
- an annular end wall (18) provided with a plurality of injection systems (20) each centred on a respective axis (24) and each having an upstream end forming a bushing (26') for receiving a head (21) of a fuel injector (22), a downstream end (28) opening into said combustion chamber, and an annular air inlet (30) arranged between said upstream and downstream ends so that the air admitted through said annular air inlet (30) mixes, within the injection system, with the fuel coming from the fuel injector (22), and
- an annular shroud (40') covering an upstream side of said end wall (18) and comprising a plurality of injector ports (42) respectively arranged facing said injection systems (20), said annular shroud (40') and said end wall (18) delimiting together an annular space (78) into which the annular air inlet (30) of each injection system (20) opens,
said annular shroud (40') including a plurality of air intake ports (60) separate from said injector ports (42),
said combustion chamber being **characterized in that** said bushing (26') of each of said injection systems crosses the corresponding injector port (42) of said annular shroud and comprises, at its upstream end, an annular collar (62) having a free end (64) remote from said axis (24) of the injection system by a first distance (d1) greater than or equal to a second distance (d2) separating a rim of said corresponding injector port (42) from said axis (24) of the injection system.

2. The annular combustion chamber according to claim 1, wherein said air intake ports (60) and said injector ports (42) are distributed so that at least one air intake port (60) is circumferentially arranged between each pair of consecutive injector ports (42) along the circumference of said annular shroud (40').

3. The annular combustion chamber according to claim 2, wherein said air intake ports (60) are alternately distributed with said injector ports (42) along the circumference of said annular shroud (40').

4. A combustion chamber module (59) for a turbine engine, comprising:
- an annular combustion chamber (8) according to any of claims 1 to 3, and
- an annular row of fuel injectors (22) comprising respective injector heads (21) mounted respectively fitted in said bushings (26') of the injection systems (20) of said combustion chamber.

5. The combustion chamber module according to claim 4, wherein each injector head (21) includes a central nose (54) for injecting fuel, an axial air intake device (56) arranged around said central nose, and a peripheral fuel injection device (58) arranged around said axial air intake device.

6. The combustion chamber module according to claim 4 or 5, wherein said injector ports (42) of said annular shroud (40') have respective isobarycentres (68) inscribed on a first circle (70) centred on an axis (14) of said combustion chamber (8) and having a first diameter (D1).

7. The combustion chamber module according to claim 6, wherein said air intake ports (60) of said annular shroud (40') have respective isobarycentres (72) inscribed on a second circle (74) centred on the axis (14) of said combustion chamber (8) and having a second diameter (D2) strictly greater than said first diameter (D1) of said first circle (70).

8. The combustion chamber module according to claim 6, wherein said air intake ports (60) of said annular shroud (40') have respective isobarycentres (72) inscribed on said first circle (70).

9. A turbine engine for an aircraft, **characterized in that** it comprises a combustion chamber module (59) according to any of claims 4 to 8.
